# EUROPEAN PATENT APPLICATION

(11) **EP 3 882 913 A1**
(43) Date of publication of application: **22.09.2021**
(21) Application number: 18940719.0
(22) Date of filing: 07.12.2018
(51) Int. Cl.: G10L 21/0208

(54) **ECHO ELIMINATION METHOD AND TERMINAL**

(30) Priority: 20.11.2018 CN 201811382416
(71) Applicant: Wangsu Science & Technology Co., Ltd., Shanghai 201800 (CN)
(72) Inventor: LIN, Huidong, Shanghai 201800 (CN); CHENGUO, Huangshou, Shanghai 201800 (CN); SUN, Lei, Shanghai 201800 (CN)
(74) Representative: De Arpe Tejero, Manuel
(86) International application number: PCT/CN2018/119887
(87) International publication number: WO 2020/103209

(57) **Abstract**

The present disclosure provides an echo cancellation method and a terminal and relates to the field of audio and video real-time communication technology. The echo cancellation method includes collecting, by a terminal, first-end audio data, the first-end data including a voice of a first-end user and an audio played by an audio playback device on the terminal. Then reference audio data corresponding to the first-end audio data is queried from a cache region, the cache region caches to-be-played audio data played on the audio playback device as the reference audio data. The reference audio data is then used to cancel the audio played by the audio playback device in the first-end audio data to determine the corrected audio data. Finally, the corrected audio data is sent to a second-end user terminal. Because the reference audio data is used to cancel the audio played on the audio playback device in the first-end audio data, the voice of the first-end user is left, the audio played on the audio playback device is prevented from interfering with the voice of the first-end user, thereby improving call quality between the first-end user and a second-end user.

## Description

### FIELD OF THE DISCLOSURE

The present disclosure generally relates to the field of audio and video real-time communication technology and, more particularly, relates to method and terminal for echo cancellation.

### BACKGROUND

With an improvement of bandwidth and terminal performance, a single audio or video call scenario seems boring and can no longer meet user needs. An application of "chatting while watching", that is, watching a TV program and talking at a same time on a same terminal (such as a mobile phone or TV), is derived. In other cases, when a game is being played, audio capturing and audio playing may also be involved. However, background sound generated by a TV program and human voice may both be captured by a microphone and sent to a far end, which affects call quality. In still other cases, when a game is being played, different caller sides may capture the sound back and forth, which generates unwanted echoes, causes noisy voice quality and affects user experience.

In existing technology, the background sound collected by a terminal is simply regarded as a noise to suppress, making it impossible to accurately identify the background sound and only a small part of the noise can be cancelled. This affects voice call quality. In other cases, after the background sound is acquired on a software layer level and is synthesized with a far-end audio, the background sound is used directly as reference data for echo cancellation. However, since the acquired background sound is often re-synthesized, the background sound is different from actual playback data, which affects cancellation effect. Therefore, there is an urgent need for a technical solution that can effectively cancel external echo and improve audio call quality.

### BRIEF SUMMARY OF THE DISCLOSURE

In existing technology, during a process of watching a video while chatting, a background sound of the video is collected and sent to a far end by a microphone, thereby affecting call quality. Embodiment of the present application provides a method and a terminal for echo cancellation.

One aspect of the present application provides an echo cancellation method. The echo cancellation method includes: collecting, by a terminal, first-end audio data, the first-end audio data including a voice of a first-end user and an audio played by an audio playback device on the terminal; querying, by the terminal, reference audio data corresponding to the first-end audio data from a cache region, the cache region caching audio data on the audio playback device as the reference audio data; using, by the terminal, the reference audio data to cancel the audio played by the audio playback device in the first-end audio data, and determining corrected audio data; and sending, by the terminal, the corrected audio data to a second-end user terminal.

Because the terminal caches audio data on the audio playback device as reference audio data in advance, when the audio is played on the audio playback device, the terminal collects the audio played on the audio playback device and the voice of the first-end user during an audio playback, the reference audio data is used to cancel the audio played on the audio playback device in the first-end audio data, the voice of the first-end user is left, the audio played on the audio playback device is prevented from interfering with the voice of the first-end user, thereby improving call quality between the first-end user and a second-end user.

Optionally, the audio data on the audio playback device includes to-be-played audio data on the audio playback device.

Optionally, querying, by the terminal, the reference audio data corresponding to the first-end audio data from the cache region includes: determining, by the terminal, similarities between the first-end audio data and each reference audio data in the cache region; and determining, by the terminal, reference audio data with a highest similarity to the first-end audio data as the reference audio data corresponding to the first-end audio data.

Because a plurality of reference audio data are cached in the cache region in advance, when the terminal collects the first-end audio data, by comparing the similarity between the first-end audio data and each reference audio data, the reference audio data corresponding to the first-end audio data is determined. There is no need to strictly match an acquisition time of the first-end audio data with the cache time of the reference audio data, thereby improving stability of echo cancellation and reducing complexity

Optionally, before sending, by the terminal, the corrected audio data to the second-end user terminal, the echo cancellation method further includes performing a gain processing on the corrected audio data by the terminal.

Because the terminal uses the reference audio data to cancel the audio played by the audio playback device in the first-end audio data, after the corrected audio data is determined, a power of the modified audio is correspondingly weakened. Thus, a gain processing is performed on the corrected audio data to increase a power of the audio received by the second-end user terminal, thereby improving a call effect between the first-end user and the second-end user.

Optionally, using, by the terminal, the reference audio data to cancel the audio played by the audio playback device in the first-end audio data, and determining the corrected audio data includes: inputting, by the terminal, the reference audio data and the first-end audio data to a linear adaptive filter, the linear adaptive filter subtracting the reference audio data from the first-end audio data, and outputting the corrected audio data.

Optionally, using, by the terminal, the reference audio data to cancel the audio played by the audio playback device in the first-end audio data, and determining the corrected audio data includes: inputting, by the terminal, the reference audio data and the first-end audio data to a linear adaptive filter, the linear adaptive filter estimating an echo audio by using the reference audio data, subtracting the echo audio from the first-end audio data, and outputting the corrected audio data.

Optionally, before inputting the reference audio data and the first-end audio data, by the terminal, to a linear adaptive filter, the method further includes: adjusting, by the terminal, audio parameters of the reference audio data and audio parameters of the first-end audio data to preset values that match the linear adaptive filter.

Optionally, the echo cancellation method further includes: when the terminal determines that an attenuation value of the first-end audio data compared to the corrected audio data is greater than a preset threshold, replacing, by the terminal, the corrected audio data with comfort noise.

Because when an attenuation value of the first-end audio data compared to the corrected audio data is greater than a preset threshold, it means that most of the first-end audio data is the audio played by the audio playback device. A proportion of the voice of the first-end user is very small, the first-end audio data can be directly deleted. At a same time, the comfort noise is added to avoid hearing undulations.

Another aspect of the present application provides a terminal. The terminal includes a collection module, configured for collecting first-end audio data with a voice of a first-end user and an audio played by an audio playback device on the terminal, a query module, configured for querying reference audio data corresponding to the first-end audio data from a cache region, the cache region caching audio data on the audio playback device as the reference audio data, a processing module, configured for using the reference audio data to cancel the audio played by the audio playback device in the first-end audio data, and determining corrected audio data, and a sending module, configured for sending the corrected audio data to a second-end user terminal.

Optionally, the audio data on the audio playback device includes to-be-played audio data on the audio playback device.

Optionally, the query module is configured to determine similarities between the first-end audio data and each reference audio data in the cache region, and determine reference audio data with a highest similarity to the first-end audio data as the reference audio data corresponding to the first-end audio data.

Optionally, the terminal further includes a gain module configured for performing a gain processing on the corrected audio data before the corrected audio data is sent to a second-end user terminal.

Optionally, the processing module is configured to input the reference audio data and the first-end audio data to a linear adaptive filter, which subtracts the reference audio data from the first-end audio data, and outputs the corrected audio data.

Optionally, the processing module is configured to input the reference audio data and the first-end audio data to a linear adaptive filter, which estimates an echo audio by using the reference audio data, subtracts the echo audio from the first-end audio data, and outputs the corrected audio data.

Optionally, the processing module is configured to adjust audio parameters of the reference audio data and audio parameters of the first-end audio data to preset values that match the linear adaptive filter before the terminal inputs the reference audio data and the first-end audio data to the linear adaptive filter.

Optionally, the processing module is configured to replace the corrected audio data with comfort noise when the terminal determines that an attenuation value of the first-end audio data compared to the corrected audio data is greater than a preset threshold.

Another aspect of the present application provides a terminal device. The terminal device includes at least one processor and at least one memory. The memory stores computer programs. When the programs are executed by the processor, the processor executes steps of the echo cancellation method described above.

Another aspect of the present application provides a computer-readable medium storing computer programs executable by a terminal device. When the programs run on the terminal device, the terminal device executes steps of the echo cancellation method described above.

In the present application, because the terminal pre-caches the to-be-played audio data on the audio playback device as reference audio data, when the audio is played on the audio playback device, the terminal collects the audio played on the audio playback device and the voice of the first-end user during an audio playback. Because the reference audio data is used to cancel the audio played on the audio playback device in the first-end audio data, the voice of the first-end user is left to prevent the audio played on the audio playback device from interfering with the voice of the first-end user, thereby improving a call quality between the first-end user and a second-end user. A linear adaptive filter is used to fit an echo audio corresponding to the reference audio data, so that the echo audio is closer to the audio played by the audio playback device. When the echo audio is used to offset the audio played by the audio playback device in the first-end audio data, an echo cancellation effect is enhanced. The corrected audio data is sent to the second-end user terminal after a gain processing, which improves a power of the modified audio and a voice effect heard by the second-end user.

### BRIEF DESCRIPTION OF THE DRAWINGS

In order to more clearly explain embodiments of the present disclosure, drawings used in a description of the embodiments will be briefly introduced below. Obviously, the drawings in the following description are some embodiments of the present disclosure. For those skilled in the art, other drawings can be acquired based on these drawings without creative efforts.
FIG. 1 illustrates an application scenario diagram consistent with various disclosed embodiments of the present application;
FIG. 2 illustrates a flow chart of an echo cancellation method consistent with various disclosed embodiments of the present application;
FIG. 3 illustrates a flow chart of another echo cancellation method consistent with various disclosed embodiments of the present application;
FIG. 4 illustrates a schematic diagram of a terminal consistent with various disclosed embodiments of the present application; and
FIG. 5 illustrates a schematic diagram of a terminal device consistent with various disclosed embodiments of the present application.

### DETAILED DESCRIPTION

In order to make objectives, technical solutions, and beneficial effects of the present disclosure clearer, the present disclosure is further described in detail below with reference to the accompanying drawings and the embodiments. The specific embodiments described herein are only used to explain instead of limiting the present disclosure.

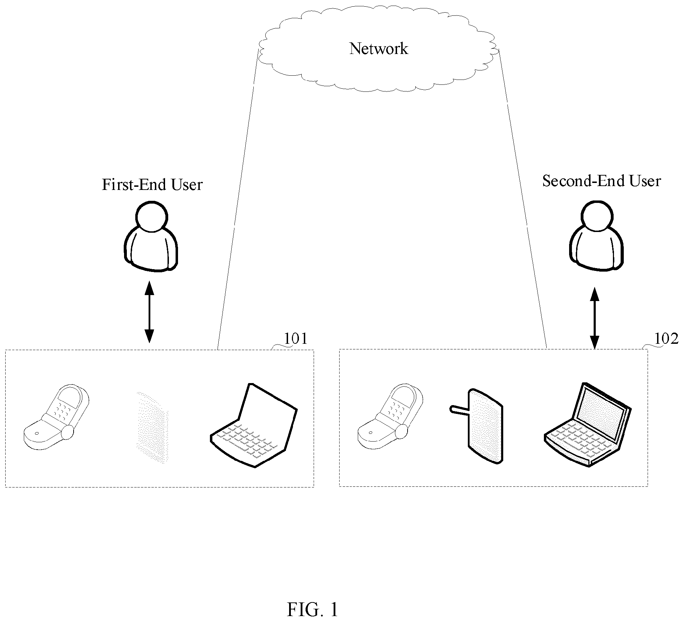

In one embodiment, an echo cancellation method may be applied to an application scenario shown in FIG. 1. The application scenario includes a first-end user terminal 101 and a second-end user terminal 102.

The first-end user terminal 101 and the second-end user terminal 102 are electronic devices with a call function and an audio/video playback function. The electronic device may be a smart TV, a smartphone, a tablet or a portable personal computer, etc. The first-end user terminal 101 and the second-end user terminal 102 may make calls through a phone or instant messaging software. Calls include voice calls and video calls. Application programs for playing audio and video are installed on the first-end user terminal 101 and the second-end user terminal 102. In one embodiment, the first-end user terminal 101 is a near-end user terminal, and the second-end user terminal 102 is a far-end user terminal. The first-end user terminal 101, that is, the near-end user terminal is used to collect a voice of the near-end user and an audio played by an audio playback device, perform an echo cancellation on the collected audio data and send the collected audio data to the far-end user terminal. The far-end user terminal is used to receive the echo-canceled audio data sent by the near-end user terminal.

Based on a same principle as above, in other embodiments, the first-end user terminal 101 may be a far-end user terminal, and the second-end user terminal 102 may be a near-end user terminal.

In the following example, for detailed description, both the first-end user terminal 101 and the second-end user terminal 102 are taken as televisions. The first-end user terminal 101 is a near-end user terminal, and the second-end user terminal 102 is a far-end user terminal. It is assumed that WeChat is installed on both the first-end user terminal 101 and the second-end user terminal 102. A first-end user makes a voice call with a second-end user through WeChat installed on a TV, and a TV program is played on the TV.

The TV saves TV audio data that a speaker needs to play in a cache region as reference audio data. The speaker plays a TV audio. The first-end user speaks into a microphone on the TV. The microphone collects the TV audio played by the speaker and a voice of the first-end user as first-end audio data. If an echo cancellation is not performed on the audio collected by the microphone, the TV audio played by the speaker is also sent to the second-end user terminal. The second-end user hears audio other than the voice of the first-end user, thereby affecting call quality. In one embodiment, The reference audio data in the cache region is used to cancel the TV audio played by the speaker in the first-end audio data, to obtain a voice of the first-end user, After a gain processing on the voice of the first-end user is performed, the voice of the first-end user is sent to the second-end user, thereby improving call quality.

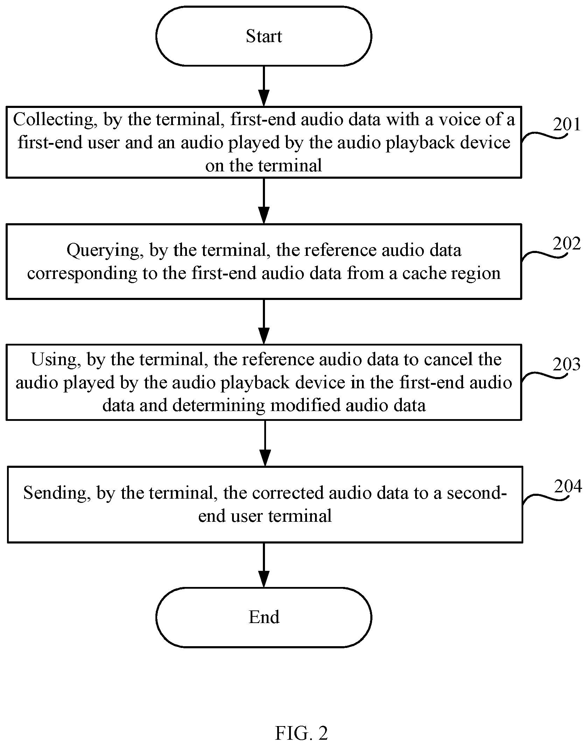

Based on the application scenario diagram shown in FIG. 1, a process of an echo cancellation method is provided in one embodiment. The process of the method may be executed by a terminal. As shown in FIG. 2, the terminal may be the first-end user terminal 101 described above. The method includes the following steps.

S201: collecting, by the terminal, first-end audio data with a voice of a first-end user and an audio played by the audio playback device on the terminal.

Optionally, the terminal is an electronic device with a call function and an audio/ video playback function. The electronic device may be a smart TV, a smart phone, a tablet computer, or a portable personal computer, etc.

The terminal collects first-end audio data through a microphone. The audio playback device on the terminal can be a speaker. An Audio played by the audio playback device can be an audio in a video, such as an audio of a TV program, an audio played on a player, etc. The audio played by the audio playback device may also be a pure audio, such as music played by a music player, a radio broadcast played by a radio station, and a mobile phone ringtone. The audio played by the audio playback device may also be a voice of the second-end user received by the terminal.

When the audio playback device receives a plurality of to-be-played audios, the plurality of to-be-played audios can be played at a same time. For example, when the speaker receives audio data of the TV program and voice data of the second-end user at a same time, the speaker simultaneously plays the audio of the TV program and the voice of the second-end user. An audio duration collected each time by the terminal can be preset. For example, the audio duration collected by the terminal each time is 5 ms.

Optionally, the first-end audio data further includes audio parameters of the first-end audio data. Specifically, the audio parameters include audio size, sampling rate, number of channels, bit width, and interleaving, etc.

S202: querying, by the terminal, the reference audio data corresponding to the first-end audio data from a cache region.

A cache region is preset. The cache region caches audio data on the audio playback device as reference audio data. A duration of each piece of reference audio data cached in the cache region can be preset. The duration of each piece of the reference audio data corresponds to a duration of an audio played on the audio playback device collected by the terminal. For example, the duration of each piece of reference audio data is 5ms, and the duration of the audio played on the audio playback device collected each time by the terminal is 5ms.

In one possible embodiment, the audio data on the audio playback device includes to-be-played audio data on the audio playback device. The cache region caches the to-be-played audio data on the audio playback device as the reference audio data.

In another possible embodiment, the audio data on the audio playback device includes the audio data that has been played on the audio playback device. The cache region caches the audio data that has been played on the audio playback device as the reference audio data.

S203: using, by the terminal, the reference audio data to cancel the audio played by the audio playback device in the first-end audio data and determining corrected audio data.

The reference audio data has a high correlation with the audio played by the audio playback device. Subtracting the reference audio data from the first-end audio data can offset the audio played by the audio playback device in the first-end audio data.

S204: sending, by the terminal, the corrected audio data to a second-end user terminal.

Because the terminal caches the to-be-played audio data on the audio playback device as reference audio data in advance, when the audio is played on the audio playback device, the terminal collects the audio played on the audio playback device and the voice of the first-end user during an audio playback. Because the reference audio data is used to cancel the audio played on the audio playback device in the first-end audio data, the voice of the first-end user is left to prevent the audio played on the audio playback device from interfering with the voice of the first-end user, thereby improving a call quality between the first-end user and a second-end user.

Optionally, in the above step S202, when the terminal queries the reference audio data corresponding to the first-end audio data from the cache region, at least the following embodiments are provided in the present application.

In one possible embodiment, the terminal determines similarities between the first-end audio data and each reference audio data in the cache region. Reference audio data with a highest similarity to the first-end audio data is determined as the reference audio data corresponding to the first-end audio data.

Specially, a plurality of reference audio data are cached in advance in the cache region. For each reference audio data, the first-end audio data and the reference audio data are input into a linear adaptive filter. According to the convergence speed of the linear adaptive filter, a similarity between the first-end audio data and the reference audio data is determined. After the similarity between the first-end audio data and each reference audio data is obtained, from the plurality of reference audio data cached in the cache region, one of the reference audio data with a highest similarity to the first-end audio data is selected as the reference audio data corresponding to the first-end audio data.

Because the plurality of reference audio data are cached in the cache region in advance, when the terminal collects the first-end audio data, by comparing the similarity between the first-end audio data and each reference audio data, the reference audio data corresponding to the first-end audio data is determined. There is no need to strictly match an acquisition time of the first-end audio data with the cache time of the reference audio data, thereby improving stability of echo cancellation and reducing complexity.

In another possible embodiment, a duration of the first-end audio data collected each time and a duration of the reference audio data are preset to a same value. Each time a piece of the reference audio is cached, a serial number is assigned. A serial number for each cache of reference audio data is assigned. At a same time, each time a piece of the first-end audio data is collected, a serial number is assigned. The reference audio data corresponding to the first-end audio data is determined by matching the serial numbers.

Serial numbers to the reference audio data are assigned according to a sequence of caching each cache of reference audio data. Serial numbers to the first-end audio data are assigned according to a sequence of collecting the first-end audio data. The serial numbers are used to match the first-end audio data with the reference audio data, thereby improving matching efficiency.

Optionally, in the above step S203, a linear adaptive filter may be used to determine the corrected audio data. at least the following two embodiments are provided in the present application.

In one possible embodiment, the reference audio data and the first-end audio data are input into the linear adaptive filter. The linear adaptive filter subtracts the reference audio data from the first-end audio data, and outputs the corrected audio data.

In another possible embodiment, the reference audio data and the first-end audio data are input to the linear adaptive filter. The linear adaptive filter uses the reference audio data to estimate an echo audio, subtracts the echo audio from the first-end audio data, and outputs corrected audio data.

Specifically, since after the audio playback device plays an audio, the audio will be reflected by obstacles such as walls. There is a certain difference between the audio played on the audio playback device collected by the terminal and the reference audio data. According to a correlation between the reference audio data and the audio played by the audio playback device, an echo fitting model is built first. The echo fitting model is used to make the reference audio data as close as possible to the audio played by the audio playback device. Then, based on the echo fitting model, coefficients of the linear adaptive filter are adjusted. After the linear adaptive filter converges stably, the reference audio data and the first-end audio data are input to the linear adaptive filter. According to the reference audio data, the linear adaptive filter firstly estimates the echo audio, which is very close to the audio played by the audio playback device. Then the first-end audio data is used to subtract the echo audio and output the corrected audio data that cancels the audio played by the audio playback device in the first-end audio data.

Because a linear adaptive filter is used to estimate an echo audio corresponding to the reference audio data, the reference audio data is closer to the audio played on the audio playback device. The echo audio is used to cancel the audio played by the audio playback device in the first-end audio data, thereby improving echo cancellation effect.

Optionally, before the terminal inputs the reference audio data and the first-end audio data to the linear adaptive filter, the terminal adjusts audio parameters of the reference audio data and audio parameters of the first-end audio data to preset values that match the linear adaptive filter.

Exemplarily, when the sampling rate of the reference audio data and the sampling rate of the first-end audio data do not match the sampling rate supported by the linear adaptive filter, A sampling rate of the reference audio data and a sampling rate of the first-end audio data are adjusted to a sampling rate supported by the linear adaptive filter.

Exemplarily, when number of channels of the reference audio data and number of channels of the first-end audio data do not match number of channels supported by the linear adaptive filter, the number of channels of the reference audio data and the number of channels of the first-end audio data are adjusted to a number of channels supported by the linear adaptive filter.

Exemplarily, when the linear adaptive filter supports interleaving of audio data of each channel, while the reference audio data and the first-end audio data are non-interleaved, the reference audio data and the first-end audio data are converted into interleaving.

Optionally, the terminal inputs the reference audio data and the first-end audio data into the linear adaptive filter. After the corrected audio data is outputted, the corrected audio data may also include the audio played by the audio playback device. An echo cancellation may be further performed on the corrected audio data. The following manner can be applied in one embodiment.

When an attenuation value of the first-end audio data compared with the corrected audio data is determined to be greater than a preset threshold, the terminal replaces the corrected audio data with comfort noise. Because when the attenuation value of the first-end audio data compared to the corrected audio data is greater than a preset threshold, it means that most of the first-end audio data is the audio played by the audio playback device. A proportion of the voice of the first-end user is very small, the first-end audio data can be directly deleted. At a same time, the comfort noise is added to avoid hearing undulations.

Optionally, in the above step S204, before the terminal sends the corrected audio data to the second-end user terminal, the terminal may perform a gain processing on the corrected audio data. Then the corrected audio data after the gain processing is sent to the second-end user terminal. Because the terminal uses the reference audio data to cancel the audio played by the audio playback device in the first-end audio data, after the corrected audio data is determined, a power of the modified audio is correspondingly weakened. Thus, a gain processing is performed on the corrected audio data to increase a power of the audio received by the second-end user terminal, thereby improving a call effect between the first-end user and the second-end user.

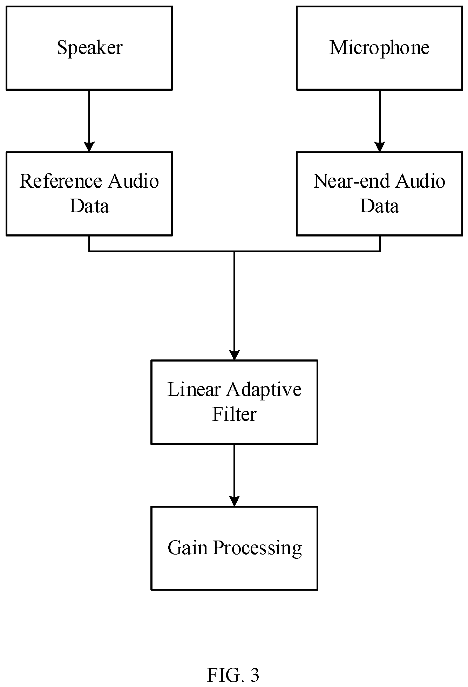

In order to better explain one embodiment of present application, an echo cancellation method is described below with reference to a specific implementation scenario. The first-end user terminal is set as a near-end user terminal and the second-end user terminal is set as a far-end user terminal. The first-end user terminal collects the first-end voice data through a microphone. The audio playback device on the first-end user terminal is a speaker. A player on the first-end user terminal plays a video. At a same time, the first-end user uses the first-end user terminal to talk to the second-end user. As shown in FIG. 3, the first-end user terminal collects to-be-played audio data on the speaker as reference audio data through a hardware chip interface. The to-be-played audio data on the speaker includes an audio played by the player and a voice of the second-end user. The microphone collects the audio played on the speaker as the first-end audio data. The audio played on the speaker includes an audio played on the player and a voice of the second-end user. The first-end audio data and the reference audio data are input into a linear adaptive filter. The linear adaptive filter estimates an echo audio from the reference audio data, which is very close to the audio playing on the speaker. The first-end audio data is used to subtract the echo audio and output the corrected audio data. It is determined whether an attenuation value of the first-end audio data compared with the corrected audio data is greater than a preset threshold. If the attenuation value of the first-end audio data compared with the corrected audio data is greater than the preset threshold, the corrected audio data is replaced with comfort noise, otherwise the corrected audio data is sent to the second-end user terminal after a gain processing.

Because the first-end user terminal caches the to-be-played audio data on the audio playback device as the reference audio data in advance, when an audio is played on the audio playback device, the first-end user terminal collects an audio played on the audio playback device and a voice of the first-end user during an audio playback. Because the reference audio data is used to cancel the audio played on the audio playback device in the first-end audio data, the voice of the first-end user is left to prevent the audio played on the audio playback device from interfering with the voice of the first-end user, thereby improving a call quality between the first-end user and a second-end user. A linear adaptive filter is used to fit an echo audio corresponding to the reference audio data, so that the echo audio is closer to the audio played by the audio playback device. So when the echo audio is used to offset the audio played by the audio playback device in the first-end audio data, an echo cancellation effect is better. In addition, the corrected audio data is sent to the second-end user terminal after a gain processing, which improves a power of the modified audio and a voice effect heard by the second-end user.

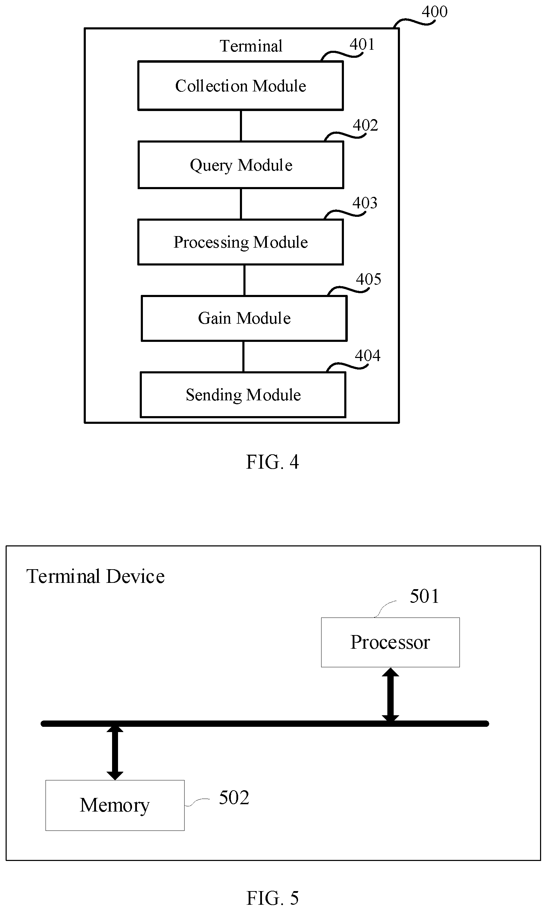

Based on a same technical concept of the echo cancellation method described above, a terminal is provided in one embodiment. As shown in FIG. 4, the terminal 400 includes: a collection module 401 configured for collecting first-end audio data with a voice of a first-end user and an audio played by an audio playback device on the terminal; a query module 402 configured for querying the reference audio data corresponding to the first-end audio data from a cache region, which caches the audio data on the audio playback device as the reference audio data; a processing module 403 configured for using the reference audio data to cancel audio played by the audio playback device in the first-end audio data and determine corrected audio data; and a sending module 404 configured for sending the corrected audio data to a second-end user terminal.

Optionally, the audio data on the audio playback device includes to-be-played audio data on the audio playback device.

Optionally, the query module 402 is configured to determine similarities between the first-end audio data and each reference audio data in the cache region; and determine reference audio data with a highest similarity to the first-end audio data as the reference audio data corresponding to the first-end audio data.

Optionally, the terminal further includes a gain module 405 configured for performing a gain processing on the corrected audio data before the corrected audio data is sent to a second-end user terminal.

Optionally, the processing module 403 is configured to input the reference audio data and the first-end audio data to a linear adaptive filter, which subtracts the reference audio data from the first-end audio data and outputs the corrected audio data.

Optionally, the processing module 403 is configured to input the reference audio data and the first-end audio data to a linear adaptive filter, which uses the reference audio data to estimate an echo audio, subtracts the first-end audio data from the echo audio, and outputs the corrected audio data.

Optionally, the processing module 403 is further configured to adjust audio parameters of the reference audio data and audio parameters of the first-end audio data to preset values that match a linear adaptive filter before the reference audio data and the first-end audio data are input to the linear adaptive filter.

Optionally, the processing module 403 is further configured to replace the corrected audio data with comfort noise when it is determined that an attenuation value of the first-end audio data compared to the corrected audio data is greater than a preset threshold.

Base on to a same technical concept, a terminal device is provided in one embodiment. As shown in FIG. 5, the terminal device includes at least one processor 501 and a memory 502 connected to the at least one processor. A specific connection medium between the processor 501 and the memory 502 is not limited herein. A connection between the processor 501 and the memory 502 through a bus in FIG. 5 is taken as an example. The bus may be divided into an address bus, a data bus, a control bus, etc.

In one embodiment, the memory 502 stores instructions that can be executed by at least one processor 501. The at least one processor 501 can execute steps included in the echo cancellation method described above by executing the instructions stored in the memory 502.

The processor 501 is a control center of the terminal device. Various interfaces and lines can be used to connect various parts of the terminal device. Echoes are cancelled by running or executing the instructions stored in the memory 502 and calling the data stored in the memory 502. Optionally, the processor 501 may include one or more processing units. The processor 501 may integrate application processors and modem processors. The application processors mainly deal with the operating system, user interface and application programs, etc. The modem processors mainly deal with wireless communications. The modem processors may not be integrated into the processor 501. In some embodiments, the processor 501 and the memory 502 may be installed on a same chip. In some embodiments, they may also be installed on separate chips.

The processor 501 may be a general-purpose processor, such as a central processing unit (CPU), a digital signal processor, an application specific integrated circuit (ASIC), a field programmable gate array or other programmable logic device, a discrete gate or a transistor Logic devices, a discrete hardware components, which may implement or execute the method, steps and logic block diagrams disclosed in the embodiments of the present application. The general-purpose processor may be a microprocessor or any conventional processor, etc. Steps of the disclosed method in combination with the embodiments of the present application may be directly performed by a hardware processor or by a combination of hardware and software modules in a processor.

The memory 502 is a non-volatile computer-readable storage medium for storing non-volatile software programs, non-volatile computer executable programs, and modules. The memory 502 may include at least one type of storage medium, such as a flash memory, a hard disk, a multimedia card, a card-type memory, a random access memory (RAM), a static random access memory (SRAM), a programmable read only memory (PROM), a read only memory (ROM), an electrically erasable programmable read-only memory (EEPROM), a magnetic memory, a magnetic disk , a CD, etc. The memory 502 is any other medium for carrying or storing desired program codes in the form of instructions or data structures and can be accessed by a computer but is not limited thereto. The memory 502 may also be a circuit or any other device capable of implementing a storage function, for storing program instructions and/or data.

According to a same inventive concept, a computer-readable storage medium is provided in one embodiment. The readable storage medium stores computer instructions, and when the computer instructions run on a terminal device, the terminal device is controlled by the readable storage medium to execute steps of the echo cancellation method described above.

Although the preferred embodiments of the present disclosure have been described, those skilled in the art can make other changes and modifications to these embodiments once they understand basic creative concepts. So the appended claims are intended to be construed to include the preferred embodiments and all changes and modifications that fall within the protection scope of the present disclosure.

Obviously, those skilled in the art can make various modifications and variations to the present disclosure without departing from the spirit and scope of the present disclosure. If the modifications and variations of the present disclosure fall within the protection scope of the claims of the present disclosure and their equivalent technologies, the present disclosure also intends to include these modifications and variations.

## Claims

1. An echo cancellation method, comprising:
collecting, by a terminal, first-end audio data, the first-end audio data comprising a voice of a first-end user and an audio played by an audio playback device of the terminal;
querying, by the terminal, reference audio data corresponding to the first-end audio data from a cache region, wherein the cache region caches audio data on the audio playback device as the reference audio data;
using, by the terminal, the reference audio data to cancel the audio played by the audio playback device in the first-end audio data, and determining corrected audio data; and
sending, by the terminal, the corrected audio data to a second-end user terminal.

2. The method according to claim 1, wherein the audio data on the audio playback device includes to-be-played audio data on the audio playback device.

3. The method according to claim 1, wherein querying, by the terminal, the reference audio data corresponding to the first-end audio data from the cache region comprises:
determining, by the terminal, similarities between the first-end audio data and each reference audio data in the cache region; and
determining, by the terminal, reference audio data with a highest similarity to the first-end audio data as the reference audio data corresponding to the first-end audio data.

4. The method according to any one of claims 1 to 3, wherein before sending, by the terminal, the corrected audio data to a second-end user terminal, the method further comprises:
performing a gain processing on the corrected audio data by the terminal.

5. The method according to claim 4, wherein using, by the terminal, the reference audio data to cancel the audio played by the audio playback device in the first-end audio data, and determining the corrected audio data comprise:
inputting the reference audio data and the first-end audio data, by the terminal, to a linear adaptive filter, wherein the linear adaptive filter subtracts the reference audio data from the first-end audio data, and outputs the corrected audio data.

6. The method according to claim 4, wherein using, by the terminal, the reference audio data to cancel the audio played by the audio playback device in the first-end audio data, and determining the corrected audio data comprise:
inputting the reference audio data and the first-end audio data, by the terminal, to a linear adaptive filter, wherein the linear adaptive filter estimates an echo audio by using the reference audio data, subtracts the echo audio from the first-end audio data, and outputs the corrected audio data.

7. The method according to claim 5 or claim 6, wherein before inputting the reference audio data and the first-end audio data, by the terminal, to the linear adaptive filter, the method further comprises:
adjusting audio parameters of the reference audio data and audio parameters of the first-end audio data, by the terminal, to preset values that match the linear adaptive filter.

8. The method according to claim 7, further comprising:
when the terminal determines that an attenuation value of the first-end audio data compared to the corrected audio data is greater than a preset threshold, replacing, by the terminal, the corrected audio data with comfort noise.

9. A terminal device, comprising:
a memory, storing computer programs; and
a processor, coupled with the memory and, when the computer programs being executed, configured to:
collect first-end audio data with a voice of a first-end user and an audio played by an audio playback device on the terminal;
query reference audio data corresponding to the first-end audio data from a cache region, which caches audio data on the audio playback device as the reference audio data;
use the reference audio data to cancel the audio played by the audio playback device in the first-end audio data, and determine corrected audio data; and
send the corrected audio data to a second-end user terminal.

10. The terminal device according to claim 9, wherein the audio data on the audio playback device includes to-be-played audio data on the audio playback device.

11. The terminal device according to claim 9, wherein the processor is further configured to:
determine similarities between the first-end audio data and each reference audio data in the cache region; and
determine reference audio data with a highest similarity to the first-end audio data as the reference audio data corresponding to the first-end audio data.

12. The terminal device according to any one of claims 9-11, wherein the processor is further configured to:
perform a gain processing on the corrected audio data before the corrected audio data is sent to a second-end user terminal.

13. The terminal device according to claim 12, wherein the processor is further configured to:
input the reference audio data and the first-end audio data to a linear adaptive filter, wherein the linear adaptive filter subtracts the reference audio data from the first-end audio data, and outputs the corrected audio data.

14. The terminal device according to claim 12, wherein the processor is further configured to:
input the reference audio data and the first-end audio data to a linear adaptive filter, wherein the linear adaptive filter estimates an echo audio by using the reference audio data, subtracts the echo audio from the first-end audio data, and outputs the corrected audio data.

15. The terminal device according to claim 13 or claim 14, wherein the processor is further configured to:
before the reference audio data and the first-end audio data are input to a linear adaptive filter, adjust audio parameters of the reference audio data and audio parameters of the first-end audio data to preset values that match the linear adaptive filter.

16. The terminal device according to claim 15, wherein the processor is further configured to:
when an attenuation value of the first-end audio data compared to the corrected audio data is determined to be greater than a preset threshold, replace the corrected audio data with comfort noise.

17. A terminal device, comprising at least one processor and at least one memory, wherein the memory stores computer programs, when the programs are executed by the processor, the processor is caused to execute steps of the method according to any one of claims 1-8.

18. A computer-readable storage medium, wherein the computer-readable medium stores computer programs executable by a terminal device, when the programs run on the terminal device, the terminal device is caused to execute steps of the method according to any one of claims 1-8.
